## Europäisches Patentamt
## European Patent Office
## Office européen des brevets

(19)

(11) Numéro de publication: **0 100 578**
**B1**

(12)

# FASCICULE DE BREVET EUROPEEN

(45) Date de publication du fascicule du brevet:
**17.09.86**

(51) Int. Cl.⁴: **F 16 L 41/08,** F 16 L 47/00

(21) Numéro de dépôt: **83201120.9**

(22) Date de dépôt: **29.07.83**

---

(54) **Raccord de dérivation.**

---

(30) Priorité: **02.08.82 FR 8213602**

(43) Date de publication de la demande:
**15.02.84 Bulletin 84/7**

(45) Mention de la délivrance du brevet:
**17.09.86 Bulletin 86/38**

(84) Etats contractants désignés:
**AT BE CH DE FR GB IT LI LU NL SE**

(56) Documents cités:
**US - A - 2 316 974**
**US - A - 3 999 785**
**US - A - 4 073 513**
**US - A - 4 097 073**

(73) Titulaire: **DRAKA POLVA B.V., Vlaardingenlaan 11,
NL-1062 HM Amsterdam (NL)**

(72) Inventeur: **Acda, Petrus Marinus, Vrijdom, 13, Enkhuizen
(NL)**

(74) Mandataire: **Bouchoms, Maurice et al, Solvay & Cie
Département de la propriété industrielle 310, rue de
Ransbeek, B-1120 Bruxelles (BE)**

---

## Description

La présente invention concerne un raccord de dérivation comportant une coquille munie d'un branchement tubulaire, d'une rainure annulaire ménagée dans la paroi interne de la coquille autour de l'orifice du branchement tubulaire et d'un joint annulaire d'étanchéité logé dans la rainure annulaire.

De tels raccords sont couramment exploités dans les réseaux de distribution d'eau potable et de gaz afin de connecter de façon étanche des conduites individuelles à une conduite principale. Ainsi qu'il est montré dans le brevet BE-A-833 318 (POLVA-NEDERLAND B.V.), et dans le brevet US-A-3999785 (VICTAULIC CY) et dans le brevet US-A-4073513 (BLAKELEY ENGINEERING Ltd), dans de tels raccords, l'étanchéité entre la conduite et la coquille est assurée par un joint annulaire d'étanchéité logé dans une rainure annulaire ménagée dans la paroi interne de la coquille autour de l'orifice du branchement tubulaire. Lors du serrage de la coquille sur la conduite, le joint est comprimé contre la paroi externe de la conduite et assure l'étanchéité entre la coquille et la conduite.

Compte tenu de la forme de la coquille, le placement sur chantier du joint annulaire d'étanchéité dans la rainure annualire est une opération délicate et le maintien de ce joint dans la rainure au cours de la mise en place et du montage du raccord de dérivation est aléatoire. En effet, lors d'un choc ou simplement par gravité, le joint peut se déloger en partie voire entièrement de la rainure et, en conséquence, ne plus assurer sa fonction lors du serrage. Dans le brevet US-A-2316974 (DRESSER MANUFACTURING CY) on divulgue par contre un raccord de dérivation dans lequel l'anneau d'étanchéité est pourvu d'attaches qui sont insérées par déformation élastique dans des évidements de la coquille situés au droit du joint d'étanchéité. Dans un tel raccord la déformation des attaches risque d'entraîner une déformation locale du joint d'étanchéité et portant un défaut d'étanchéité du raccord. Par ailleurs la fixation par déformation des attaches ne donne pas une pleine satisfaction dans le temps par fait du vieillissement du matériau constitutif des attaches.

L'invention a pour but de fournir un raccord de ce type dans lequel l'inconvénient signalé est supprimé.

L'invention concerne un raccord de dérivation comportant une coquille munie d'un branchement tubulaire, d'une rainure annulaire ménagée dans la paroi interne de la coquille autour de l'orifice du branchement tubulaire et d'un joint annulaire d'étanchéité logé dans la rainure annulaire dans lequel la paroi interne de la coquille comporte au moins un évidement et dans lequel le joint annulaire d'étanchéité est pourvu d'au moins une attache fixée dans l'évidement qui se caractérise en ce que l'évidement est adjacent à la rainure annulaire et en ce que l'attache a la forme d'une rondelle qui est enfilée et serrée sur une cheville axiale équipant le fond de l'évidement ou sur un goujon ou un rivet emprisonné dans une mortaise prolongeant axialement le fond de l'évidement.

Le raccord selon l'invention peut comporter plusieurs évidements adjacents à la rainure annulaire, ainsi que plusieurs attaches sur le joint annulaire d'étanchéité, le nombre d'évidements étant égal au nombre d'attaches. De bons résultats on été obtenus avec un raccord comportant deux évidements et deux attaches.

Les évidements adjacents à la rainure annulaire peuvent se trouver à l'extérieur et/ou à l'intérieur de celle-ci. De même, les attaches sur le joint annulaire d'étanchéité peuvent se trouver à l'extérieur et/ou à l'intérieur de celui-ci. A chaque évidement correspond une attache. Généralement, les évidements et dès lors les attaches se trouvent tous du même côté. De préférence, ils sont tous situés extérieurement.

La distance entre chaque évidement peut être quelconque. De préférence, les évidements sont équidistants entre eux. Selon un mode particulièrement préféré de réalisation, le raccord comporte deux évidements diamétralement opposés situés sur la génératrice de la coquille traversant diamétralement l'orifice du branchement tubulaire.

La forme des évidements adjacents à la rainure annulaire peut être quelconque. Généralement, les évidements sont de forme cylindrique dont l'axe est disposé perpendiculairement aux génératrices de la coquille. Leurs dimensions sont adaptées afin de loger les attaches du joint annulaire d'étanchéité. Leur profondeur peut être égale ou supérieure à l'épaisseur des attaches. Elle est le plus souvent supérieure. Le fond des évidements peut être plan ou non. De préférence, il est plan et perpendiculaire à l'axe des évidements.

La forme et les dimensions des évidements sont en outre adaptés afin que les attaches puissent être fixées dans les évidements. A cet effet, les évidements peuvent présenter n'importe quelle configuration.

Selon un premier mode de réalisation, le fond des évidements est pourvu axialement d'une cheville de longueur égale ou supérieure à la profondeur des évidements et de section ayant des dimensions égales ou très faiblement inférieures à celles d'une ouverture prévue dans les attaches. Selon un mode d'exécution avantageux, la section droite des chevilles et les ouvertures dans les attaches sont circulaires et le diamètre des chevilles est au moins égal au diamètre des ouvertures.

Dans le cas de l'utilisation de goujons ou de rivets, la section de la mortaise a des dimensions égales ou supérieures à celles d'une ouverture prévue dans les attaches.

La forme des attaches sur le joint d'étanchéité peut être quelconque. Toutefois, elle doit être complémentaire à la forme des évidements afin que les attaches y soient logées et fixées.

Les attaches comprennent généralement une courte languette de liaison avec le joint annulaire d'étanchéité. La forme et les dimensions de la languette sont quelconques. De préférence, son épaisseur est égale à celle des attaches et sa largeur est inférieure à la plus grande dimension des attaches.

Les attaches ont la forme d'une rondelle ou d'un œilleton et sont fixées dans les évidements correspondants au moyen d'une fixation.

Selon un premier mode d'exécution, de telles attaches sont enfilées sur la cheville axiale équipant le fond des évidements. Dans ce cas, le diamètre de l'ouverture centrale des attaches peut être égal ou légèrement supérieur à celui de la cheville. De préférence, ces diamètres sont choisis pour réaliser le serrage des attaches sur la cheville dans les évidements. L'épaisseur des attaches peut être égale ou inférieure à la profondeur des évidements et à la longueur des chevilles. De préférence, l'épaisseur des attaches est inférieure à la profondeur des évidements et à la longueur des chevilles. L'extrémité des chevilles qui dépasse les attaches enfilées sur les chevilles dans les évidements et qui émerge éventuellement des évidements peut être déformée à chaud de manière à réaliser une tête qui recouvre et fixe les attaches dans les évidements et obture les évidements.

Selon un deuxième mode d'exécution, de telles attaches sont logées dans les évidements dont le fond est prolongé axialement par une mortaise destinée à emprisonner un goujon. Dans ce cas, l'épaisseur de l'attache peut être égale ou inférieure à la profondeur des évidements. De préférence, elle est égale à la profondeur des évidements. Les dimensions de l'ouverture dans les attaches sont alors choisies afin de réaliser le serrage des attaches sur le goujon.

Selon un troisième mode d'exécution préféré, les attaches ayant la forme d'une rondelle ou d'un œilleton sont logées dans les évidements dont le fond est prolongé axialement par une mortaise destinée à emprisonner le tenon d'un rivet. Dans ce cas, l'épaisseur de l'attache est inférieure à la profondeur des évidements. Les attaches sont fixées par la tête des rivets qui obturent les évidements.

Le raccord selon l'invention peut être réalisé en un matériau quelconque et notamment en matière thermoplastique. Le joint annulaire d'étanchéité est en général un matériau élastique et peut être du caoutchouc naturel ou synthétique. Dans le raccord selon l'invention, les attaches sont en général de même nature que le matériau constituant le joint annulaire d'étanchéité et sont fabriquées par exemple par moulage en même temps que le joint annulaire d'étanchéité.

Les fixations et notamment les chevilles, goujons et rivets éventuellement utilisés pour fixer les attaches sont réalisées en un matériau quelconque rigide. En général, on préfère les réaliser à partir du matériau constituant le raccord.

Le raccord de dérivation conforme à l'invention est explicité plus en détail dans la description qui va suivre de certains modes de réalisation. Dans cette description, on se référera aux figures des dessins annexés dans lesquelles:

– la figure 1 est une vue en coupe et en élévation d'un coquille de raccord de dérivation conforme à l'invention

– la figure 2 est une vue en plan de la pièce selon la figure 1

– la figure 3 est une vue de détail de la partie de la figure 2 cerclée en pointillés

– la figure 4 est une vue de détail de la partie de la figure 1 cerclée en pointillés

– la figure 5 est une vue en détail montrant un autre mode de réalisation de la partie de la figure 1 cerclée en pointillés.

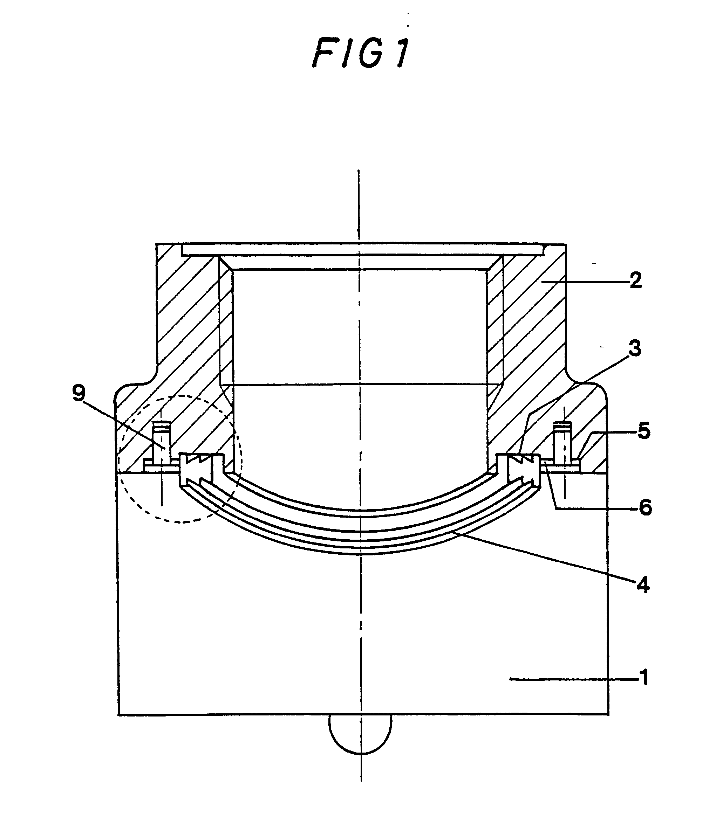

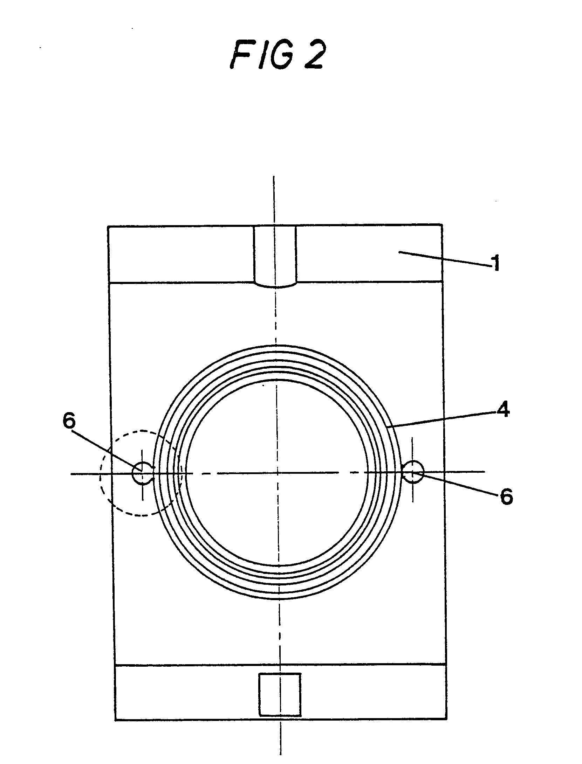

Ainsi qu'il apparaît aux figures 1 et 2, le raccord de dérivation comporte une coquille 1 munie d'un branchement tubulaire 2 pour le raccordement d'une conduite de dérivation, d'une rainure annulaire 3 ménagée dans la paroi interne de la coquille 1 autour de l'orifice du branchement tubulaire 2, et d'un joint annulaire d'étanchéité 4 logé dans la rainure annulaire 3. La paroi interne de la coquille 1 comporte deux évidements 5 adjacents à la rainure annulaire 3 situés à l'extérieur de cette rainure en position diamétralement opposée sur la génératrice de la coquille traversant diamétralement l'orifice du branchement tubulaire 2 et le joint annulaire d'étanchéité 4 est pourvu de deux attaches 6 diamétralement opposées fixées dans les évidements 5.

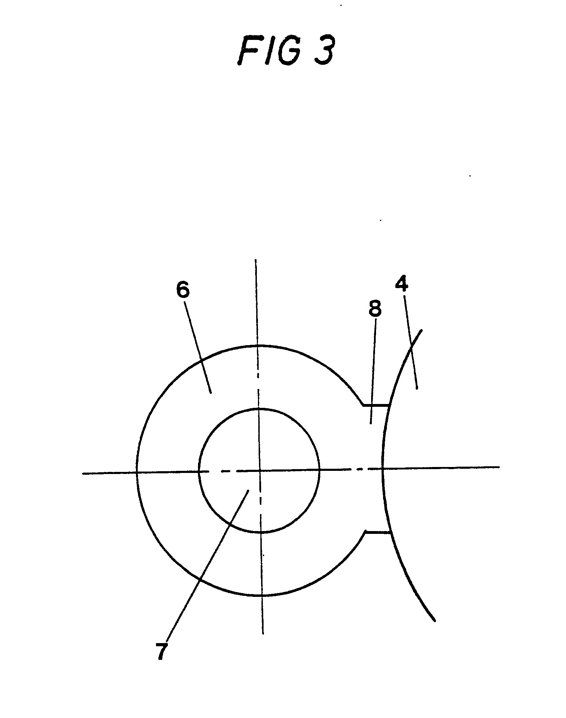

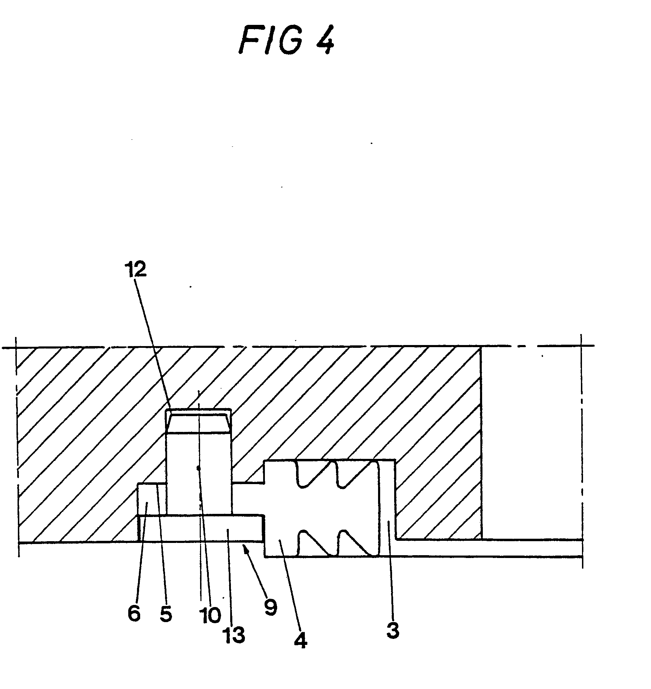

Ainsi qu'il apparaît à la figure 3, les attaches 6 en forme de rondelle comprennent une ouverture centrale 7 et une languette 8. Comme le montre la figure 4, l'épaisseur des attaches 6 est inférieure à celle du joint annulaire d'étanchéité 4 et les attaches 6 sont disposées à égale distance des bords supérieur et inférieur de ce joint. Dans le mode de réalisation du raccord illustré par la figure 1 à 4, les évidements 5 adjacents à la rainure annulaire 3 sont de section droite circulaire de diamètre très faiblement supérieur à celui des attaches 6 et forment un cylindre dont l'axe est perpendiculaire à la génératrice de la coquille traversant diamétralement l'orifice du branchement tubulaire 2. Une face des attaches 6 se trouve sur le fond des évidements 5. Ainsi qu'il apparaît plus particulièrement aux figures 1 et 4, les attaches 6 sont fixées dans les évidements 5 au moyen des rivets 9 dont les tenons cylindriques 10 traversant les ouvertures 7 des attaches 6 sont emprisonnés dans les mortaises cylindriques axiales 12 formant le fond des évidements 5 et dont les têtes 13 recouvrent et fixent les attaches 6 et obturent les évidements 5.

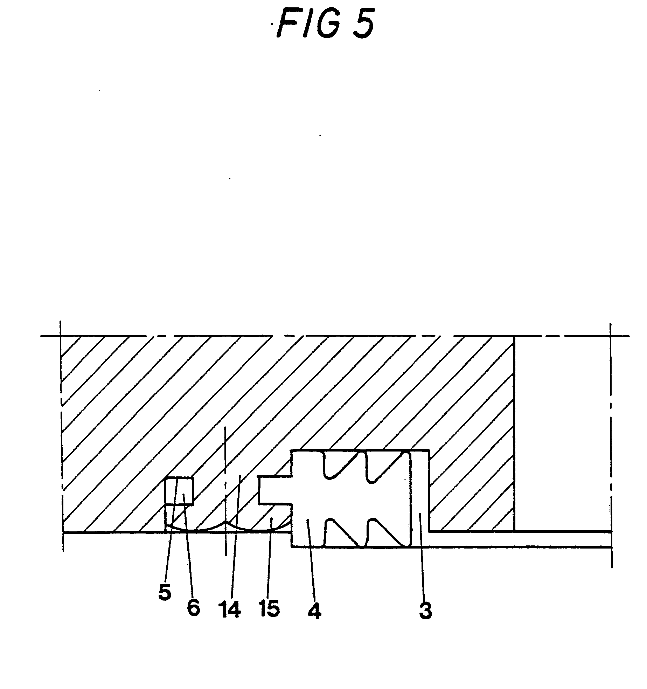

Selon un autre mode de réalisation du raccord, les évidements 5 ne possèdent pas les mortaises cylindriques axiales 12 mais sont munis de chevilles cylindriques axiales 14 de longueur supérieure à la profondeur des évidements 5 et de diamètre égal à celui des ouvertures 7 des attaches 6. La figure 5 illustre le mode de fixation des attaches 6 dans les évidements 5 d'un raccord de ce type. Les extrémités des chevilles 14 émergeant des évidements 5 ont été déformées à chaud de manière à former les têtes 15 qui recouvrent et fixent les attaches 6 et obturent les évidements 5.

**Revendications**

1. Raccord de dérivation comportant une coquille (1) munie d'un branchement tubulaire (2), d'une rainure annulaire (3) ménagée dans la paroi interne de la coquille (1) autour de l'orifice du branchement tubulaire (2) et pourvue d'un joint annulaire d'étanchéité (4) logé dans la rainure annulaire (3) dans lequel la paroi interne de la coquille (1) comporte au moins un évidement (5) et dans lequel le joint annulaire d'étanchéité (4) est pourvu d'au moins une attache (6) fixée dans l'évidement (5) caractérisé en ce que l'évidement est adjacent à la rainure annulaire (9) et en ce que l'attache (6) a la forme d'une rondelle qui est enfilée et serrée sur une cheville axiale (14) équipant le fond de l'évidement (5) ou sur un goujon ou un rivet (9) emprisonné dans une mortaise prolongeant axialement le fond de l'évidement.

2. Raccord de dérivation selon la revendication 1, caractérisé en ce qu'il comporte deux évidements (5) diamétralement opposés situés sur la génératrice de la coquille traversant diamétralement l'orifice du branchement tubulaire (2).

3. Raccord de dérivation selon la revendication 1 ou 2 caractérisé en ce que les attaches (6) comprennent une languette de liaison (8) avec le joint annulaire d'étanchéité (4) de largeur inférieure à la plus grande dimension des attaches (6).

4. Raccord de dérivation selon l'une quelconque des revendications 1 à 3, caractérisé en ce que l'éxtrémité de la cheville axiale (14) est déformée à chaud de façon à réaliser une tête (15) qui recouvre et fixe les attaches (6) dans les évidements (5) et obture les évidements (5).

5. Raccord de dérivation selon une quelconque des revendications 1 à 3 caractérisé en ce que le rivet (9) est emprisonné par son tenon (10), la tête (13) du rivet assurant la fixation des attaches (6) et obstruant les évidements (5).

**Patentansprüche**

1. Abzweigverbindung mit einem Gehäuse (1) ausgestattet mit einem rohrförmigen Anschluss (2), einer ringförmigen Nut (3), die in der Innenwand des Gehäuses (1) und um die Öffnung des rohrförmigen Anschlusses (2) angeordnet und mit einer ringförmigen Dichtung (4) ausgestattet ist, die in der ringförmigen Nut (3) angeordnet ist, wobei die Innenwand des Gehäuses (1) mindestens eine Aussparung (5) aufweist und die ringförmige Dichtung (4) mit mindestens einem Bund (6) ausgestattet ist, das in der Aussparung (5) befestigt ist, dadurch gekennzeichnet, dass die Aussparung in der Nähe der ringförmigen Nut (3) liegt und dass der Bund (6) die Form einer Scheibe aufweist, die auf einem axialen Stift (14), mit dem der Boden der Aussparung (5) ausgestattet ist, oder auf einem Zapfen oder einem Niet (9) aufgesetzt und festgezwängt ist, der in einem Schlitz festgehalten ist, der den Boden der Aussparung axial verlängert.

2. Abzweigverbindung nach Anspruch 1, dadurch gekennzeichnet, dass sie zwei Aussparungen (5) aufweist, die einander diametral auf der Erzeugenden des Gehäuses gegenüberliegen, die die Öffnung des rohrförmigen Anschlusses (2) diametral durchdringt.

3. Abzweigverbindung nach Anspruch 1 oder 2, dadurch gekennzeichnet, dass die Bunde (6) eine Verbindungszunge (8) mit der ringförmigen Dichtung (4) von einer Dicke kleiner als die grösste Abmessung der Bunde (6) aufweisen.

4. Abzweigverbindung nach irgendeinem der Ansprüche 1 bis 3, dadurch gekennzeichnet, dass das Ende des axialen Stifts (14) warm verformt ist, um einen Kopf (15) zu bilden, der die Bunde (6) in den Aussparungen (5) abdeckt und festlegt und die Aussparungen (5) verschliesst.

5. Abzweigverbindung nach irgendeinem der Ansprüche 1 bis 3, dadurch gekennzeichnet, dass der Niet (9) durch seinen Schaft (10) festgehalten ist, wobei der Kopf (13) des Niets die Befestigung der Bunde (6) gewährleistet und die Aussparungen (5) verschliesst.

**Claims**

1. Branch connection comprising a shell (1) provided with a tubular branch (2) and with an annular groove (3) provided in the internal wall of the shell (1) around the orifice of the tubular branch (2) and provided with an annular sealed joint (4) accommodated within the annular groove (3), wherein the internal wall of the shell (1) includes at least one recess (5) and wherein the annular sealed joint (4) is provided with at least one shackle (6) fixed within the recess (5), characterized in that the recess is adjacent to the annular groove (9) and in that the shackle (6) has the form of a washer which is slipped and pressed on an axial pin (14) providing the floor of the recess (5) or on a gudgeon or a rivet (9) retained in a mortise extending the floor of the recess axially.

2. Branch connection according to Claim 1, characterized in that it includes two recesses (5) which are diametrically opposed and which are situated on the generatrix of the shell traversing diametrically the orifice of the tubular branch (2).

3. Branch connection according to Claim 1 or 2, characterized in that the shackles (6) include a tongue (8) providing a connection with the annular sealed joint (4) having a width which is smaller than the largest dimension of the shackles (6).

4. Branch connection according to any one of Claims 1 to 3, characterized in that the end of the axial pin (14) is deformed while hot in such a manner as to provide a head (15) which covers and fixes the shackles (6) in the recesses (5) and closes the recesses (5).

5. Branch connection according to any one of Claims 1 to 3, characterized in that the rivet (9) is retained by its stem (10), the head (13) of the rivet ensuring the fixing of the shackles (6) and obstructing the recesses (5).

1/5

# FIG 1

6/5

# FIG 2

3/5

# FIG 3

4/5

FIG 4

5/5

·FIG 5